# EUROPÄISCHE PATENTANMELDUNG

(11) **EP 4 064 044 A1**
(43) Veröffentlichungstag der Anmeldung: **28.09.2022**
(21) Anmeldenummer: 21164088.3
(22) Anmeldetag: 22.03.2021
(51) Int. Cl.: G06F 9/50

(54) **DYNAMISCHE VERTEILUNG EINER GESAMTRESSOURCE IN EINER CONTAINER-LAUFZEITUMGEBUNG**

(71) Anmelder: Siemens Aktiengesellschaft, 80333 München (DE)
(72) Erfinder: Feist, Christian Peter, 80689 München (DE); Knierim, Christian, 81373 München (DE)

(57) **Zusammenfassung**

Die Erfindung gibt ein Verfahren zur Verteilung einer Gesamtressource in einer Container-Laufzeitumgebung (3) an, wobei die Gesamtressource aus einer ersten Ressource und mindestens einer weiteren Ressource besteht, wobei die Container-Laufzeitumgebung (3) erste Container-Instanzen (3a) und weitere Container-Instanzen (3b) aufweist, mit den Schritten:
- Zuordnen (S1) einer ersten Priorität und der ersten Ressource zu den ersten Container-Instanzen (3a),
- Zuordnen (S2) mindestens einer weiteren Priorität und der mindestens eine weitere Ressource zu den weiteren Container-Instanzen (3b), wobei die mindestens eine weitere Priorität eine niedrigere Rangfolge als die erste Priorität aufweist,
- Anpassung (S3) eines Volumens der ersten Ressource und eines Volumens der mindestens eine weitere Ressource in Abhängigkeit von einer Auslastung der ersten Ressource, während ein Volumen der Gesamtressource konstant bleibt, wobei die Auslastung angibt, zu welchem Anteil Kapazitäten der ersten Ressource belegt sind.

Außerdem gibt die Erfindung ein technisches Gerät, eine übergeordnete Management-Komponente, ein Computerprogrammprodukt und ein computerlesbares Medium an.

## Beschreibung

### HINTERGRUND DER ERFINDUNG

### Gebiet der Erfindung

Die vorliegende Erfindung betrifft ein Verfahren zur Verteilung einer Gesamtressource in einer Container-Laufzeitumgebung. Die Erfindung betrifft außerdem ein zugehöriges technisches Gerät, eine übergeordnete Management-Komponente, ein Computerprogrammprodukt und ein computerlesbares Medium.

### Beschreibung des Stands der Technik

Da technische Systeme, insbesondere industrielle Systeme und Geräte, insbesondere Steuergeräte, Industrie-PCs, IoT-Geräte, Edge-Geräte und Cloud-Server, oft über einen langen Zeitraum von 10-20 Jahren, teilweise auch 30 oder 40 Jahre, im Feld verwendet werden, sind sie sich ständig ändernden Voraussetzungen und einem dynamischen Umfeld ausgesetzt.

Um mit diesen Umständen umzugehen, werden vor allem neue Geräte so konzipiert, dass sie über die Nutzungszeit flexibel angepasst werden können, z.B. durch die Unterstützung von nachladbaren Applikationen mittels Container-Technologien.

Die Aufgabe der Erfindung besteht darin, eine Lösung bereitzustellen, mit welcher während der Laufzeit eines technischen Systems auf sich ändernde Umstände regiert werden kann.

Von besonderem Vorteil ist, wenn die Reaktion auf sich ändernde Umstände und damit verbundenen Adaptionen, während des Betriebs des technischen Systems, also unterbrechungsfrei stattfindet.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Verteilung einer Gesamtressource in einer Container-Laufzeitumgebung, wobei die Gesamtressource aus einer ersten Ressource und mindestens einer weiteren Ressource besteht, wobei die Container-Laufzeitumgebung erste Container-Instanzen und weitere Container-Instanzen aufweist. Das Verfahren umfasst die Schritte:
- Zuordnen einer ersten Priorität und der ersten Ressource zu den ersten Container-Instanzen,
- Zuordnen mindestens einer weiteren Priorität und der mindestens eine weitere Ressource zu den weiteren Container-Instanzen, wobei die mindestens eine weitere Priorität eine niedrigere Rangfolge als die erste Priorität aufweist,
- Anpassung eines Volumens der ersten Ressource und eines Volumens der mindestens eine weitere Ressource in Abhängigkeit von einer Auslastung der ersten Ressource, während ein Volumen der Gesamtressource konstant bleibt, wobei die Auslastung angibt, zu welchem Anteil Kapazitäten der ersten Ressource belegt sind,
wobei die Anpassung in Abhängigkeit der ersten Priorität und der mindestens eine weitere Priorität erfolgt.

Die ersten Container-Instanzen können im Sinne der Erfindung als eine erste Gruppe von Container-Instanzen und die weiteren Container-Instanzen als eine weitere Gruppe von Container-Instanzen betrachtet werden. Die beiden Gruppen weisen unterschiedliche Applikationen mit unterschiedlichen Prioritäten. Sie können gemeinschaftlich auch als Ressourcengruppen bezeichnet werden.

"Während das Volumen der Gesamtressource bei der Anpassung des Volumens der ersten Ressource und des Volumens der mindestens eine weitere Ressource konstant bleibt" bedeutet, dass das Volumen der ersten Ressource zu Kosten der weiteren Ressource angepasst wird.

Anders ausgedrückt wird zumindest ein Teil der weiteren Ressource an die erste Ressource übertragen.

Dass "die Anpassung des Volumens in Abhängigkeit der ersten Priorität und der mindestens einen weiteren Priorität erfolgt", bedeutet im Sinne der Erfindung, dass, da die erste Priorität höher ist, also eine höhere Rangfolge aufweist, als die weitere Priorität, dies in die Anpassung des Volumens miteinbezogen wird und falls es ein Wert der aktuellen Auslastung der ersten Ressource verlangt (also über einem Schwellwert liegt), den ersten Container-Instanzen zusätzliche Ressourcen, also ein Anteil des Volumens der weiteren Ressourcen, zugeteilt wird oder alternativ, falls es ein Wert der aktuellen Auslastung der ersten Ressource erlaubt (also unter einem Schwellwert liegt), den ersten Container-Instanzen Ressourcen abgezogen werden, also ein Anteil des Volumens der ersten Ressource den weiteren Ressourcen (zurück) zugeteilt wird. Diese Zuteilung erfolgt abhängig von der Prioritätsverteilung.

Durch die mit dem Stand der Technik erläuterte flexible Gestaltung und Anpassung von technischen Systemen während der Lebenszeit, ergeben sich Szenarien, in denen auf einem technischen Gerät Container-Instanzen mit unterschiedlicher Kritikalität, das bedeutet unter anderem mit unterschiedlicher Priorität, dass bedeutet mit unterschiedlicher zeitlicher Dringlichkeit und/oder mit unterschiedlicher Dringlichkeit bezüglich der Stabilität oder bezüglich der Lauffähigkeit des technischen Systems, ausgeführt werden. Dies gilt insbesondere für solche technischen Systeme, welche eine zeitkritische Verarbeitung, insbesondere von Sensordaten, durchführen, aber auch solche, die einen weniger kritischen Prozess, insbesondere einen Logging-Prozess, implementieren.

In einer Containerlaufzeitumgebung ist es zusätzlich so, dass die tatsächlich von einer Container-Instanz benötigten Ressourcen stark von der aktuellen Situation, insbesondere einem aktuellen Fertigungsschritt, abhängen können. Hierdurch ändert sich der Ressourcenbedarf und auch die Priorität von Applikationen einer Container-Instanz laufend.

Werden Ressourcenbeschränkungen, insbesondere IO- oder NetzwerkBandbreite, CPU-Auslastung, für Container-Instanzen, wie im Stand der Technik üblich, fest vorgegeben, kann es sein, dass Ressourcen unter Umständen ungenutzt bleiben oder nicht ideal ausgenutzt werden. Dieses Problem wird durch die Ausführungen der Erfindung gelöst.

Zusätzlich bietet die Erfindung eine Lösung an, um auf unerwartete Lastspitzen, insbesondere kurzzeitige Lastspitzen, die z.B. durch eine temporär große Menge an Anfragen erzeugt werden, innerhalb der Laufzeitumgebung dynamisch durch die Zuweisung weiterer Ressourcen zu reagieren.

Die Erfindung reagiert auf diese Umstände damit, dass die Sicherstellung der Verfügbarkeit von Rechenressourcen für Container mit (zeit-)kritischen Funktionen sichergestellt wird. Außerdem wird eine Lösung bereitgestellt, die es ermöglicht, die Verfügbarkeit der Ressourcen für nachladbare Applikationen und den damit verbundenen Containern-Instanzen zur Laufzeit auf flexible Art und Weise sicherzustellen.

Die Grundidee der Erfindung besteht somit darin, die Ressourcenbeschränkungen, insbesondere maximale CPU-Quota, Speicher und/oder Disk-IO-Bandbreite, einzelner oder Gruppen von nachladbaren Applikationen oder von Container-Instanzen, dynamisch und zur Laufzeit anzupassen. Die Anpassung geschieht in Abhängigkeit der aktuell anfallenden Auslastung der Ressourcen, insbesondere der von Container-Instanzen mit einer hohen Priorität. Beim Starten einer Container-Instanz wird diese hierzu einer von mehreren unterschiedlichen Gruppen und damit verbundenen Prioritäten, insbesondere durch die Verwendung von Ressourcengruppen, zugeordnet, die insbesondere die Priorität im Sinne der Verfügbarkeit widerspiegelt, insbesondere niedrig, mittel oder hoch.

Zur Umsetzung der Erfindung wird insbesondere auf dem System laufend die Ressourcenverwendung der einzelnen Container ermittelt. Überschreitet dabei eine der Ressourcengruppen den für eine bestimmte Ressource konfigurierten Auslastungs-Schwellwert, werden die Ressourcenbeschränkungen von niedrig priorisierten Ressourcengruppen bzw. Container-Instanzen weiter eingeschränkt und den Container-Instanzen mit höherer Priorität werden weitere Ressourcen zugeteilt. So kann die Verfügbarkeit von Container-Instanzen mit einer höheren Priorität auch bei höherem Bedarf gewährleistet werden.

Der Auslagerungsprozess, also dass die Ressourcenbeschränkungen von niedrig priorisierten Ressourcengruppen bzw. Container-Instanzen weiter eingeschränkt werden und dass den Container-Instanzen mit höherer Priorität weitere Ressourcen zugeteilt werden, kann so gestaltet werden, dass die Container-Instanzen bei erneuter Verfügbarkeit von Ressourcen auf dem ursprünglichen wieder zurückverlagert werden.

Dieses Auslagerungsverfahren stellt an sich ebenfalls eine Neuerung dar, da bei der Verwendung von Ressourcenlimits bei dem bisherigen Verfahren die Container-Instanzen bei der Nichtverfügbarkeit von Ressourcen nicht gestartet werden und nicht durch Eingriff der Orchestrierungssoftware gestoppt oder verlagert werden.

In einer Weiterbildung der Erfindung läuft die Container-Laufzeitumgebung auf:
- einem industriellen System,
- einem industriellen Computer,
- einem industriellen Gerät,
- einem Computer,
- ein mobiles Gerät,
- einem Steuergerät,
- einem Gerät einer Internet-of-Things-Umgebung,
- einem Edge-Gerät
- einem Server und/oder
- einem Cloud-Server.

Das technische Gerät auf welchem die Container-Laufzeitumgebung läuft, kann somit auf unterschiedliche Weisen ausgestaltet sein.

In einer weiteren Weiterbildung der Erfindung ist die Gesamtressource als:
- Prozessoreinheit,
- Hauptspeicher,
- Netzwerkbandbreite,
- IO-Bandbreite von Speichergeräten,
- Hardware-Beschleunigungsbausteine, insbesondere GPU, TPU und/oder FPGA
- Zugriffsberechtigung,
   und/oder
- eine Anzahl an File-Deskriptoren ausgebildet.

Die erste Ressource und die zweite Ressource sind jeweils entsprechend der Gesamtressource ausgebildet.

In einer weiteren Weiterbildung der Erfindung ist die Auslastung der ersten Ressource von einer Aktivität mindestens einer auf den ersten Container-Instanzen laufenden Applikation abhängig.

Unter der Aktivität der mindestens einen auf den ersten Container-Instanzen laufenden Applikation, ist eine Aktivität zu verstehen, welche eine Verwendung der mindestens eine Ressource mit sich bringt. Eine höhere Aktivität führt zu einer höheren Auslastung der Ressource und einem höheren Bedarf an Ressourcen. Überschreitet die Auslastungen einen Schwellwert so kann gemäß dem erfindungsgemäßen Verfahren die erste Ressource angepasst werden und deren Volumen erhöht werden. Das Volumen der weiteren Ressource wird in diesem Fall reduziert, da die Gesamtressource konstant bleibt.

In einer weiteren Weiterbildung der Erfindung wird das Zuordnen der ersten Priorität und der mindestens eine weitere Priorität während einer Laufzeit der Container-Laufzeitumgebung wiederholt durchgeführt. Dies hat den Vorteil, dass während der Laufzeit zu beliebigen Zeitpunkten wiederholt festgelegt werden kann, welchen Container-Instanzen, welche Priorität zugeordnet ist.

In einer weiteren Weiterbildung der Erfindung erfolgt das Zuordnen der ersten Priorität und der mindestens eine weitere Priorität in Abhängigkeit einer Kritikalität einer Aufgabe, welche den ersten Container-Instanzen und den weiteren Container-Instanzen zugeordnet ist.

In einer weiteren Weiterbildung der Erfindung gibt die Kritikalität an, wie zeitkritisch und/oder sicherheitskritisch die Aufgabe ist. Eine höher zeitkritische Aufgabe muss früher abgearbeitet werden als eine weniger zeitkritische Aufgaben. Eine höher sicherheitskritische Aufgabe hat eine höhere Relevanz auf die weitere Beständigkeit des fortlaufen des technischen Systems als eine weniger sicherheitskritische Aufgabe.

In einer weiteren Weiterbildung der Erfindung erfolgt das Zuordnen der ersten Priorität und der mindestens einer weiteren Priorität durch Anwendung einer Orchestrierungskomponente. Insbesondere kann für die Orchestrierung Kubernetes verwendet werden und den Ressourcengruppen können Namesspaces zugeordnet werden.

In einer weiteren Weiterbildung der Erfindung wird die Auslastung der ersten Ressource:
- zu zuvor festgelegten Zeitpunkten,
- manuell wählbaren Zeitpunkten,
- automatisch bei Eintritt definierter Ereignisse und/oder
- periodisch
bestimmt.

Dies hat den Vorteil, dass eine Umverteilung von Ressourcen zu verschiedenen Zeitpunkten, auch während der Laufzeit, bestimmt werden kann und immer flexibel auf sich ändernde Umstände reagiert werden kann.

In einer weiteren Weiterbildung der Erfindung werden für die Anpassung des Volumens der ersten Ressource und der mindestens eine weitere Ressource in Abhängigkeit von der Auslastung der ersten Ressource Ressourcen-Management-Regeln herangezogen. Ressourcen-Management-Regeln können insbesondere Schwellwerte für eine Auslastung der ersten Ressource oder der weiteren Ressource, Zeitpunkte für ein Ermitteln der Auslastung und Regeln zur Anwendung und Gestaltung des erfindungsgemäßen Verfahrens angeben. Die Ressourcen-Management-Regeln können kontinuierlich unter Einbezug von gelerntem Verhalten des technischen Systems angepasst werden.

In einer weiteren Weiterbildung der Erfindung kann die Anpassung des Volumens der ersten Ressource und der mindestens eine weitere Ressource des Weiteren in Abhängigkeit von Befehlen einer übergeordneten Management-Komponente durchgeführt werden. Die Management-Komponente kann als Orchestrierungskomponente ausgebildet sein.

Die übergeordnete Management-Komponente kann insbesondere als Container-Orchestrierungskomponente und/oder Kubernetes-Master ausgebildet sein. Die übergeordnete Management-Komponente hat die Möglichkeit, auf die durch das erfindungsgemäße Verfahren ermittelte Anpassung und davon abweichend zu reagieren, insbesondere durch das Verlagern aller Container-Instanzen einer Ressourcengruppen mit niedriger Priorität, den weiteren Container-Instanzen, auf ein anderes Gerät, wenn diesen aufgrund der Kritikalität der Aufgaben der ersten Container-Instanzen über einen bestimmten Zeitraum keine Ressourcen zugeteilt werden.

Die Erfindung umfasst außerdem ein Technisches Gerät aufweisend eine Gesamtressource und eine Container-Laufzeitumgebung. Das technische Gerät ist ausgebildet zur Verteilung der Gesamtressource in der Container-Laufzeitumgebung nach einem erfindungsgemäßen Verfahren, wobei die Gesamtressource der Container-Laufzeitumgebung zugeordnet ist, wobei die Gesamtressource aus einer ersten Ressource und mindestens einer weiteren Ressource besteht.

Die Container-Laufzeitumgebung des technischen Geräts aufweisend:
- ersten Container-Instanzen,
- weitere Container-Instanzen,
- eine erste Zuordnungskomponente, welche ausgebildet ist, den ersten Container-Instanzen eine erste Priorität und die erste Ressource zuzuordnen,
- mindestens eine weitere Zuordnungskomponente, welche ausgebildet ist, den weiteren Container-Instanzen mindestens eine weitere Priorität und die mindestens eine weitere Ressource zuzuordnen, wobei die mindestens eine weitere Priorität eine niedrigere Rangfolge als die erste Priorität aufweist und
- eine Anpassungskomponente, welche ausgebildet ist, ein Volumen der ersten Ressource und der mindestens eine weitere Ressource in Abhängigkeit von einer Auslastung der ersten Ressource anzupassen, wobei die Auslastung angibt, zu welchem Anteil Kapazitäten der ersten Ressource belegt sind.

Die mindestens eine weitere Zuordnungskomponente kann der eine erste Zuordnungskomponente entsprechen oder eine zusätzliche Kom-ponente darstellen.

In einer weiteren Weiterbildung der Erfindung ist das technische Gerät ausgebildet als:
- ein Steuergerät,
- ein Gerät einer Internet-Of-Things-Umgebung,
- ein IoT-Edge-Server,
- ein Verschlüsselungsgerät und/oder
- ein Hardware Security Modul.

Die Erfindung umfasst außerdem eine übergeordnete Management-Komponente, welcher mindestens ein erfindungsgemäßes technisches Gerät zugeordnet ist.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßes Verfahrens nach einem der Ansprüche 1 bis 10 ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßes Verfahrens nach einem der Ansprüche 1 bis 10 ausgeführt werden, wenn das Computerprogramm auf der Recheneinheit ausgeführt wird.

Vorteilhaft an der Erfindung ist insbesondere, dass Ressourcenbeschränkungen für nachladbare Applikationen, insbesondere Container-Instanzen dynamisch, also unter Berücksichtigung der tatsächlich benötigten Ressourcen der vorhandenen Container erfolgen können. Weiterhin vereint die Erfindung, im Gegensatz zum Stand der Technik, die folgenden Vorteile in einer einzigen Lösung:
- Wichtigen, insbesondere zeitkritischen Container-Anwendungen werden bei Bedarf genügend Ressourcen zur Verfügung gestellt.
- Die von dem darunterliegenden System bereitgestellten Ressourcen werden optimaler ausgenutzt, da die Plattform bei verfügbaren Ressourcen mit niederprioren Containern ausgelastet werden kann.
- Durch die Kategorisierung der Ressourcengruppen mit Prioritäten und die dynamische Zuweisung von Ressourcenlimits kann das Gesamtsystem gegen Denial of Service Attacken geschützt werden, indem, insbesondere exponierte, niederpriore Services auf dem System temporär aufgrund von Ressourcenknappheit temporär deaktiviert oder verlagert werden und die Kern-Aufgaben des Systems garantierte Ressourcen zugeteilt bekommen und nicht exponiert sind.

Die beschriebenen Vorteile werden erreicht, indem in Abhängigkeit des aktuellen, ermittelten Ressourcenverbrauchs eine Anpassung der Ressourcenbeschränkungen anhand vorgegebener Regeln, auch als Ressourcen-Management-Policy bezeichenbar, durchgeführt werden. Dabei werden die Prioritäten von auf einem Gerät laufenden Containern berücksichtigt.

Dies führt zu einer effizienteren und flexibleren Verwendung von Container-Technologien, insbesondere in einem industriellen Kontext in der Verfügbarkeit von Ressourcen eine große Rolle spielt.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: eine schematische Darstellung einer erfindungsgemäßen übergeordneten Management-Komponente mit erfindungsgemäßen technischen Geräten.

### DETAILLIERTE BESCHREIBUNG DER ERFINDUNG

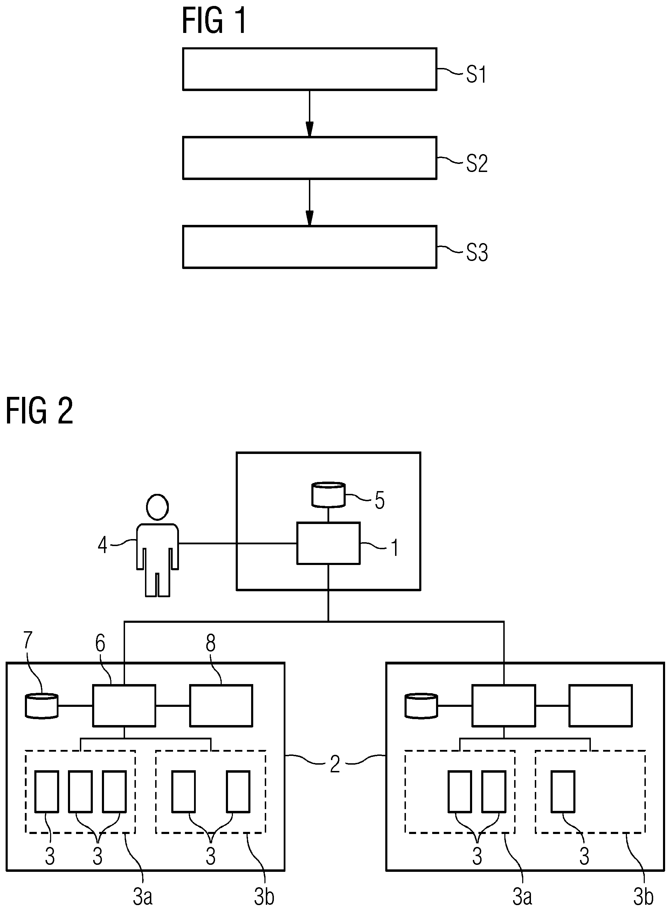

Fig. 1 zeigt ein Ablaufdiagramm des erfindungsgemäßen Verfahrens zur Verteilung einer Gesamtressource in einer Container-Laufzeitumgebung, wobei die Gesamtressource aus einer ersten Ressource und mindestens einer weiteren Ressource besteht, wobei die Container-Laufzeitumgebung erste Container-Instanzen und weitere Container-Instanzen aufweist.

Das Verfahren umfasst die Schritte:
- Schritt S1: Zuordnen einer ersten Priorität und der ersten Ressource zu den ersten Container-Instanzen,
- Schritt S2: Zuordnen mindestens einer weiteren Priorität und der mindestens eine weitere Ressource zu den weiteren Container-Instanzen, wobei die mindestens eine weitere Priorität eine niedrigere Rangfolge als die erste Priorität aufweist,
- Schritt S3: Anpassung eines Volumens der ersten Ressource und eines Volumens der mindestens eine weitere Ressource in Abhängigkeit von einer Auslastung der ersten Ressource, während ein Volumen der Gesamtressource konstant bleibt, wobei die Auslastung angibt, zu welchem Anteil Kapazitäten der ersten Ressource belegt sind,
   wobei die Anpassung in Abhängigkeit der ersten Priorität und der mindestens eine weitere Priorität erfolgt.

Fig. 2 zeigt eine schematische Darstellung einer erfindungsgemäßen übergeordneten Management-Komponente 1 mit erfindungsgemäßen technischen Geräten 2.

Die übergeordnete Management-Komponente 1, die insbesondere auf einem Edge-Management Server läuft, ist dafür zuständig, die auszuführenden Container-Instanzen 3 auf dafür vorgesehene Geräte 2 zu laden. Diese Orchestrierung geschieht entweder manuell durch einen Operator 4, oder automatisiert und in Abhängigkeit einer Container-Management-Policy 5.

Weiterhin wird ein Container im Sinne der Erfindung vor seiner Ausführung hinsichtlich bestimmter Eigenschaften, wie insbesondere hohe Verfügbarkeit, sicherheitskritischer Dienst, etc., kategorisiert. Insbesondere in die Kategorien: hohe Priorität 3a oder niedrige Priorität 3b. Mit dieser Kategorisierung, insbesondere unter Verwendung von Kubernetes Namespaces, können Container mit gleichen Eigenschaften gruppiert werden. So können beispielsweise Container mit systemkritischen Aufgaben 3a, wie dem Auswerten bestimmter Sensordaten, welche anschließend als Teil eines Steuerungsprozesses wieder zur Verfügung gestellt werden, in Bezug auf ihre Rechenressourcen gleichermaßen verwaltet werden.

Diese Gruppierung (3a, 3b) wird auf den jeweiligen Geräten 2, auf denen die Container ausgeführt werden, logisch abgebildet.

Die auf einem Gerät 2 laufende Management-Komponente 6, insbesondere ein Kubernetes kubelet 6, erhält neben der Anweisung einen Container 3 zu starten, zudem Informationen über die jeweilige Gruppe 3a, 3b, insbesondere die hohe Priorität 3a, 3b, der ein Container 3 angehört. Jeder Namespace 3a, 3b kann mit Ressourcenbeschränkungen 7 verknüpft werden. So kann konfiguriert werden, dass Container 3 einer Ressourcengruppe 3a, 3b maximal 50% der CPU-Auslastung erzeugen dürfen. Die Erfindung schlägt nun vor, die Ressourcenbeschränkung 7 flexibel zu gestalten. Dies geschieht unter Verwendung der folgenden Komponenten:
- Ressourcen-Monitor 8: Auf dem jeweiligen Gerät 2 wird die Auslastung der vorhandenen Ressourcen gemessen und nach Ressourcengruppe 3a, 3b, oder wahlweise nach Gruppe der Container 3a, 3b, aufgeschlüsselt. Die Messwerte werden an die lokale Management-Komponente 6 übergeben.
- Ressourcen-Management-Policy 7: Neben den festen Ressourcenbeschränkungen 7 werden hier erfindungsgemäß nun Regeln 7 vorgegeben, wie im Falle von Überschreiten/Unterschreiten einer bestimmten Schwelle, insbesondere eine CPU-Auslastung, reagiert werden soll. Insbesondere kann so ein Zweipunktregler 7 mit einer 40%-Hysterese für die maximale CPU-Auslastung der Low-Priority Container 3b definiert werden: Beim Überschreiten einer CPU-Auslastung von 50% durch die Container 3 des High-Priority Gruppe 3a wird die maximal erlaubte Auslastung für den Low-Priority Container 3b von 50% auf 25% reduziert. Fällt die CPU-Auslastung der High-Priority Container-Gruppe 3a anschließend unter 10%, können die ursprünglichen Beschränkungen wiederhergestellt werden.
- Management-Komponente 6: Die Management-Komponente 6 kann so in Abhängigkeit des aktuellen Ressourcenverbrauchs, insbesondere bereitgestellt als Ergebnis des Ressourcen-Monitors 8, eine Anpassung der Ressourcenbeschränkungen 7 anhand vorgegebener Regeln 7, insbesondere Ressourcen-Management-Policy 7, durchführen. Weiterhin ist die Management-Komponente 6 für die Kommunikation mit der Master-Komponente 1 zuständig. Die Management-Komponente 6 kann der Master-Komponente 1 Änderungen der Ressourcenbeschränkungen 7 mitteilen, damit die Master-Komponente 1 gegebenenfalls darauf reagieren kann. Dies kann insbesondere durch Verlagerung der Container 3 eines Low-Priority-Ressourcengruppe 3b, welche auf dem Gerät 2 aufgrund einer Anpassung der Ressourcenbeschränkungen 7 aktuell keine Rechenzeit bekommen.

Die Ressourcen, deren Nutzung überwacht und deren Beschränkungen zur Laufzeit angepasst werden kann, umfassen insbesondere die CPU (z.B. maximale CPU-Auslastung), Hauptspeicher, Netzwerk (z.B. maximale Bandbreite), IO-Bandbreite für Speichergeräte (z.B. SD-Karte, Festplatte), Zugriff auf spezielle Hardware-Beschleunigungsbausteine (z.B. GPU, TPU, FPGA), oder z.B. die maximale Anzahl an File-Deskriptoren.

Die Ressourcen-Management-Policy 7 kann gerätespezifisch oder auf mehreren Geräten 2 gleich sein. Insbesondere kann diese kryptographisch signiert sein. In einer ersten Variante wird die Policy 7 mit dem Gerät 2 ausgeliefert und kann somit nur bei einer Aktualisierung der Gerätefirmware, oder z.B. durch Tausch einer SD-Karte, geändert werden.

In einer weiteren Variante kann die Policy 7 auch durch die Management-Komponente 6 empfangen, auf Integrität und Authentizität geprüft und anschließend auf dem Gerät 2 gespeichert und umgesetzt werden.

Die Verwendung von unterschiedlichen Policies 7 ermöglicht insbesondere ein flexibles Ressourcen-Management, welches unterschiedliche Geräteklassen und Anwendungsszenarien berücksichtigt. Beispielsweise kann eine Anpassung der Ressourcenbeschränkungen 7 auf leistungsstärkeren Geräten 2 anders gestaltet werden als auf solchen mit sehr begrenzten Ressourcen.

Findet eine Anpassung der Ressourcenbeschränkungen 7 statt, kann dies insbesondere durch die Management-Komponente 6 an den Master 1 gemeldet werden. Die Information wird in einer bevorzugten Variante über eine authentisierte und kryptographisch geschützte Verbindung bereitgestellt. Der Master 1 kann anschließend entsprechend reagieren, z.B. durch das Verlagern bestimmter Container 3 von dem betroffenen Gerät 2 auf ein anderes 2, auf welchem genügend Ressourcen für Low-Priority Container 3b vorhanden sind.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Verteilung einer Gesamtressource in einer Container-Laufzeitumgebung (3),
wobei die Gesamtressource aus einer ersten Ressource und mindestens einer weiteren Ressource besteht,
wobei die Container-Laufzeitumgebung (3) erste Container-Instanzen (3a) und weitere Container-Instanzen (3b) aufweist,
mit den Schritten:
- Zuordnen (S1) einer ersten Priorität und der ersten Ressource zu den ersten Container-Instanzen (3a),
- Zuordnen (S2) mindestens einer weiteren Priorität und der mindestens eine weitere Ressource zu den weiteren Container-Instanzen (3b), wobei die mindestens eine weitere Priorität eine niedrigere Rangfolge als die erste Priorität aufweist,
- Anpassung (S3) eines Volumens der ersten Ressource und eines Volumens der mindestens eine weitere Ressource in Abhängigkeit von einer Auslastung der ersten Ressource, während ein Volumen der Gesamtressource konstant bleibt, wobei die Auslastung angibt, zu welchem Anteil Kapazitäten der ersten Ressource belegt sind,
wobei die Anpassung in Abhängigkeit der ersten Priorität und der mindestens eine weitere Priorität erfolgt.

2. Verfahren nach Anspruch 1,
wobei die Container-Laufzeitumgebung (3) auf:
- einem industriellen System (2),
- einem industriellen Computer (2),
- einem industriellen Gerät (2),
- einem Computer (2),
- ein mobiles Gerät (2),
- einem Steuergerät (2),
- einem Gerät einer Internet-of-Things-Umgebung (2),
- einem Edge-Gerät (2),
- einem Server (2) und/oder
- einem Cloud-Server (2)
läuft.

3. Verfahren nach einem der vorhergehenden Ansprüche,
wobei die Gesamtressource als:
- Prozessoreinheit,
- Hauptspeicher,
- Netzwerkbandbreite,
- IO-Bandbreite von Speichergeräten,
- Hardware-Beschleunigungsbausteine, insbesondere GPU, TPU und/oder FPGA
- Zugriffsberechtigung und/oder
- eine Anzahl an File-Deskriptoren
ausgebildet ist.

4. Verfahren nach einem der vorhergehenden Ansprüche,
wobei die Auslastung der ersten Ressource von einer Aktivität mindestens einer auf den ersten Container-Instanzen (3a) laufenden Applikation abhängig ist.

5. Verfahren nach einem der vorhergehenden Ansprüche,
wobei das Zuordnen der ersten Priorität und der mindestens eine weitere Priorität während einer Laufzeit der Container-Laufzeitumgebung (3) wiederholt durchgeführt wird.

6. Verfahren nach einem der vorhergehenden Ansprüche,
wobei das Zuordnen der ersten Priorität und der mindestens eine weitere Priorität in Abhängigkeit einer Kritikalität einer Aufgabe, welche den ersten Container-Instanzen (3a) und den weiteren Container-Instanzen (3b) zugeordnet ist, erfolgt.

7. Verfahren nach Anspruch 6,
wobei die Kritikalität angibt wie:
- zeitkritisch und/oder
- sicherheitskritisch
die Aufgabe ist.

8. Verfahren nach einem der vorhergehenden Ansprüche,
wobei die Auslastung der ersten Ressource:
- zu zuvor festgelegten Zeitpunkten,
- manuell wählbaren Zeitpunkten,
- automatisch bei Eintritt definierter Ereignisse und/oder
- periodisch
bestimmt wird.

9. Verfahren nach einem der vorhergehenden Ansprüche,
wobei für die Anpassung des Volumens der ersten Ressource und der mindestens eine weitere Ressource in Abhängigkeit von der Auslastung der ersten Ressource außerdem Ressourcen-Management-Regeln (7) herangezogen werden.

10. Verfahren nach einem der vorhergehenden Ansprüche,
wobei die Anpassung des Volumens der ersten Ressource und der mindestens eine weitere Ressource des Weiteren in Abhängigkeit von Befehlen einer übergeordneten Management-Komponente (1) durchgeführt werden kann.

11. Technisches Gerät aufweisend eine Gesamtressource und eine Container-Laufzeitumgebung (3), ausgebildet zur Verteilung der Gesamtressource in der Container-Laufzeitumgebung (3) nach einem der vorherigen Ansprüche,
wobei die Gesamtressource der Container-Laufzeitumgebung (3) zugeordnet ist, wobei die Gesamtressource aus einer ersten Ressource und mindestens einer weiteren Ressource besteht,
die Container-Laufzeitumgebung (3) aufweisend:
- ersten Container-Instanzen (3a),
- weitere Container-Instanzen (3b),
- eine erste Zuordnungskomponente (6), welche ausgebildet ist, den ersten Container-Instanzen (3a) eine erste Priorität und die erste Ressource zuzuordnen,
- mindestens eine weitere Zuordnungskomponente (6), welche ausgebildet ist, den weiteren Container-Instanzen (3b) mindestens eine weitere Priorität und die mindestens eine weitere Ressource zuzuordnen, wobei die mindestens eine weitere Priorität eine niedrigere Rangfolge als die erste Priorität aufweist,
- eine Anpassungskomponente (6), welche ausgebildet ist, ein Volumen der ersten Ressource und der mindestens eine weitere Ressource in Abhängigkeit von einer Auslastung der ersten Ressource anzupassen, wobei die Auslastung angibt, zu welchem Anteil Kapazitäten der ersten Ressource (3a) belegt sind.

12. Technisches Gerät nach Anspruch 11,
wobei das technische Gerät (2) ausgebildet ist als:
- ein Steuergerät,
- ein Gerät einer Internet-Of-Things-Umgebung,
- ein IoT-Edge-Server,
- ein Verschlüsselungsgerät und/oder
- ein Hardware Security Modul.

13. Übergeordnete Management-Komponente (1), welcher mindestens ein technisches Gerät (2) nach Anspruch 12 zugeordnet ist.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 10 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 10 ausgeführt werden, wenn das Computerprogramm auf der Recheneinheit ausgeführt wird.
